# EUROPEAN PATENT SPECIFICATION

(11) **EP 3 760 405 B1**
(45) Date of publication and mention of the grant of the patent: **20.12.2023**
(21) Application number: 20020307.3
(22) Date of filing: 01.07.2020
(51) Int. Cl.: B28B 11/04, B28B 11/24, C04B 41/00, C04B 41/86, B23K 26/082, B23K 26/352, C04B 41/85, B23K 37/02, C04B 41/45, B28B 11/00, B23K 26/08, B41M 7/00

(54) **PROCESS FOR THE DECORATION OF PORTIONS OF CERAMIC OBJECTS**
VERFAHREN ZUR DEKORATION VON TEILEN VON KERAMISCHEN GEGENSTÄNDEN
PROCÉDURE POUR LA DÉCORATION DE PARTIES D'OBJETS CÉRAMIQUES

(30) Priority: 05.07.2019 IT 201900011010
(43) Date of publication of application: 06.01.2021
(73) Proprietor: Italforni S.r.l., 41043 Formigine (MO) (IT)
(72) Inventor: Mazzacani, Filippo, 42014 Roteglia/Castellarano (RE) (IT); Mazzacani, Gabriele, 42014 Tressano/Castellarano (RE) (IT); Pagano, Nunziante, 84061 Ogliastro Cilento (SA) (IT)
(74) Representative: Gianelli, Luca

(56) References cited:
- EP-A2- 1 110 660
- BR-A- 9 700 234
- DE-A1-102014 219 480
- GB-A- 1 292 174
- IT-A1- RE20 080 087
- JP-A- H0 967 178
- US-A- 5 030 551
- US-A1- 2017 252 868

## Description

The present invention relates to a process for decorating portions of the surface of edges of ceramic slabs or tiles. It finds useful application in the decoration of edges of ceramic products, in particular fired objects. Use of the process is applicable in industrial settings in conjunction with commonly known techniques for decorating ceramic slabs and tiles and in a way which is essentially independent of the decoration application methods.

The said process can also be used in conjunction with decorations created using the most recent models of what are known as 'digital' printers, operating with inkjet technology, which, roughly put, involves the deposition of drops of ceramic inks suitable to produce a decorative effect on the surface of the ceramic product. The said ceramic inks consist of "finely dispersed suspensions" of inorganic solid parts carried by a liquid fraction, which my be organic or aqueous, to which chemical agents are added whose function is to stabilise the suspension and make it rheologically suitable. The characteristics of the inks to be deposited on the surfaces of the ceramic products can vary depending on the state of the surfaces (fired or unfired) and therefore the end result of the aesthetic effects sought with the decoration process.

In any case, the solid component of the inks consists of inorganic compounds, such as ceramic oxides or pigments, frits, opacifying oxides and oxides offering various levels of refractoriness.

Similar materials also form the solid component for glazes and/or other semi-finished ceramic products employed with other techniques for applying decorations, such as screen printing, chalcographic systems, airless systems, etc ...

Once the ceramic inks and other semi-finished ceramic products have been deposited on the surface of ceramic substrates such as slabs or tiles, whether fired or unfired, they must undergo an appropriate heat treatment in order to assume their final permanent solid shape by virtue of which the decorations formed adhere permanently to the surface to which they have been applied and give rise to a decoration which is both mechanically and chemically resistant.

In any case, the heat treatment undergone by ceramic products must be carried out both to fire the ceramic substrate and to process the decoration, separately (firing the substrate and subsequently firing the decorations) or simultaneously in a single stage (single-firing).

Normally these treatments are carried out by subjecting the entire ceramic product with the surface to which the decoration was applied to a preset heat cycle inside a kiln.

As the production of oversize ceramic products is becoming more widespread, it is more appropriate to refer to the products as slabs rather than tiles, as they may have, for example, dimensions of 1600 mm x 3200 mm x 3 - 60 mm and processing cycles which increasingly involve final cutting operations to crop or finish (calibrate) the edges of end products with dimensions which are either less than those of the original slab or are specially shaped.

In these cases the processed edges do not feature, obviously, the same decoration as is present on the visible decorated face of the slab. Therefore, decorating the edge of the ceramic substrate in a way that ensures it harmonises aesthetically with the decoration on the "good" face of the tile is difficult.

Only with some types of products (and the limited types of decorations therefor) - which imitate certain natural stone materials, such as granites
- is it possible to obtain decorated edges by creating slabs or tiles composed of various elements such as coloured powders or other semi-finished ceramic products (flakes, granules, special spray-dried products) for decoration purposes, distributed throughout the body of the ceramic product; if one wishes to obtain a graining or veining effect throughout the slab body (e.g. a marble effect), in this case the process may require a particular procedure to be followed in order to form the ceramic substrate and is, in any case, complicated and expensive.

Another technique involves, where possible, gluing a portion of a second tile onto the suitably cut edge.

The system most used for the decoration of the edges of small ceramic tiles, such as bullnose or other trims, has two separate stages: decoration of the surface of the cut edge using conventional decoration systems and, especially, ceramic inks applied by digital printers, which are subsequently fired in a ceramics kiln.

The techniques listed above, which are used to complete/achieve the decoration of parts through cutting or finishing processes involving the removal of material, have various drawbacks and limits.

The main drawbacks shared by all three methods with which these techniques are implemented include a non-negligible production cost and an equally non-negligible increase in faults, mainly due to the stresses exerted on the end product by the various processes carried out.

The production of slabs in which the decoration is of the "full-body" kind (i.e. originates from the formation of the slab in the press or the compactor), while limiting the amount of processing and handling which the product can undergo, does not however allow multiple aesthetic effects, which are in great demand (e.g. the classic wood and metal effects cannot be achieved); for this reason, we feel that this technology is limited at the outset. It should be noted that the gluing option described above involves a series of processes in which the risk of breakage, cracks, and the like is very high, and furthermore there is the drawback of not being applicable to thin and/or oversize slabs.

Finally, in the event that the decoration of the edge - or in any case of parts created through cutting or finishing processes involving the removal of material - is achieved by simply adding (to the conventional cycle) a second decoration of the cut edge surface using conventional decoration systems and, especially, ceramic inks applied with digital printers, it is always followed by a subsequent firing inside a ceramics kiln, usually of the continuous kind. It goes without saying that refiring the material leads to an increase in production costs (gas, electricity use etc), as well as to new stress being exerted on the material, leading in turn to the fault issue mentioned above. It should also be borne in mind that refiring involves the issues relating to increased emissions into the atmosphere.

IT RE20 080 087 A1 discloses a process for decorating portions of the surface of edges of ceramic slabs or tiles according to the preamble of claim 1.

One object of the present invention is to overcome the drawbacks and limits of the prior art by decorating individual portions of the surface of edges of fired ceramic slabs or tiles, using ceramic inks used for the decoration of the said objects and then carrying out the physical-chemical fixing or firing of only the materials deposited on the said portions of the surface of edges through the localised action of at least one laser beam aimed at the portion of the surface of edges in question.

Another object of the present invention is to allow any decorative effect to be effectively produced on the said surface portions regardless of the thickness of the workpiece without changing the chemical and mechanical resistance characteristics of the workpiece, especially when, as in this case, it is a ceramic product consisting of a ceramic slab or tile. Advantages offered by the present invention include the possibility of obtaining the same aesthetic effects present on the decorated surfaces of the item (the 'good' face of the slab/tile) on limited portions of the surface of the object (in this case, the edge of the slab/tile), thereby helping to create a perfectly harmonious decoration, without interruptions and with the usual mechanical and chemical resistance characteristics of ceramic decorations.

Other advantages include lower energy consumption, lower raw material costs, simplification of the entire production process, and containment of harmful emissions into the environment.

The aforesaid objects and advantages are achieved by the present invention relating to a process for decorating portions of the surface of edges of fired ceramic slabs or tiles as claimed, as described, and as illustrated in the accompanying drawings, wherein:

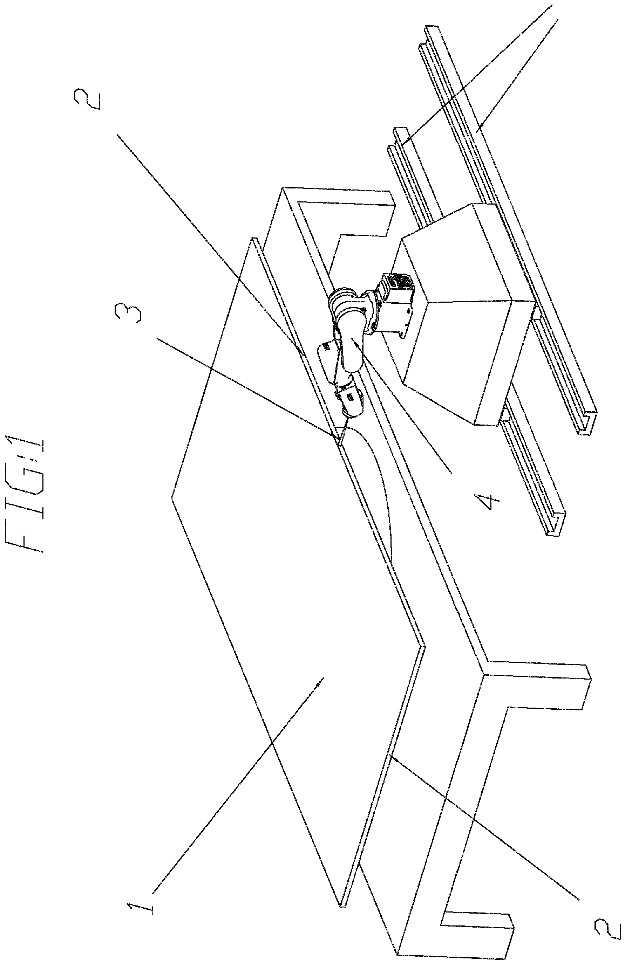

- Figure 1 shows a schematic perspective view of an apparatus for implementing the process according to the invention;
- Figure 2 shows a schematic perspective view of another apparatus for implementing the process according to the invention within a production line.

The said figures provide a schematic illustration of certain steps in a process for decorating portions of the surface of objects (edges) 2 characterised by the fact that the said process comprises the physical-chemical fixing or firing of the materials deposited - using the usual commonly known means during a previous deposition step - onto the said portions of surface through the action of at least one laser beam aimed at the individual portion of the surface in question.

In the case in hand, the previous step consists of the deposition - of ceramic inks used for the decoration of the products - onto individual portions of the surface consisting of the edges 2 of ceramic slabs or tiles 1.

In the case in hand, these objects are ceramic products, such as ceramic slabs or tiles 1, which are intended to be decorated.

In the case in question, the decoration is also produced on at least one edge 2 of the slab or tile in conjunction with the decoration already made on the 'good' face of the slab or tile 1. For example, the tile 1 may consist of a decorated ceramic tile which has already undergone at least one firing process, where the physical-chemical fixing or firing of the materials used to produce the decoration of the 'good' face of the slab or tile has already taken place.

According to the invention, therefore, a first stage in which the deposition
- of decorating materials used for decoration - onto individual portions of surface is followed by a second stage consisting of the physical-chemical fixing or firing of the materials deposited onto at least an edge 2, which represents a portion of the overall surface of the tile 1 through the action of at least one laser beam 3 aimed at the individual portion of the surface in question (edge 2).

The laser beam 3 is produced by a laser apparatus 4 which is controlled so that it moves along guides 5 parallel to the edge 2. Furthermore, the machine may envisage the processing of the edge 2 with a laser apparatus 4 in a fixed position and a slab to be decorated 1 which is movable (for example using a turntable).

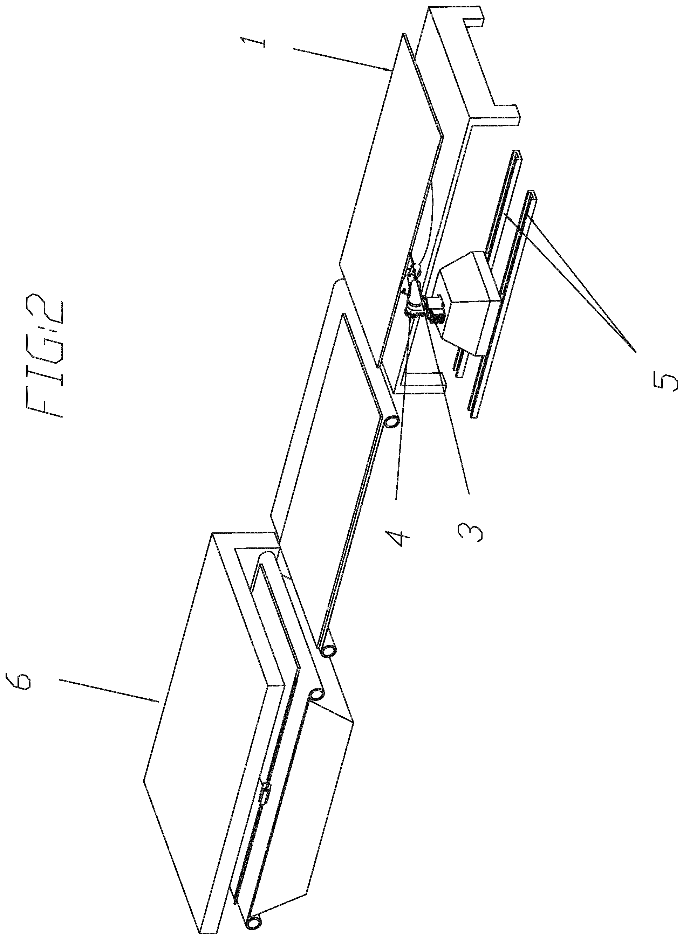

The process is applicable in industrial settings within production lines, as shown schematically in the embodiment in Figure 2, in conjunction with commonly known techniques for decorating ceramic slabs and tiles and in a way which is essentially independent of the decoration application methods.

The said procedure can also be used in conjunction with decorations created using the most recent models of what are known as 'digital' printers, operating with inkjet technology, which, roughly put, involves the deposition of drops of ceramic inks suitable to produce a decorative effect on the surface of the ceramic product. The said ceramic inks consist of "finely dispersed suspensions" of inorganic solid parts carried by a liquid fraction, which my be organic or aqueous, to which chemical agents are added whose function is to stabilise the suspension and make it rheologically suitable.

The characteristics of the inks to be deposited on the surfaces of the ceramic products can vary depending on the state of the surfaces (fired or unfired) and therefore the end result of the aesthetic effects sought with the decoration process.

In any case, the solid component of the inks consists of inorganic compounds, such as ceramic oxides or pigments, frits, opacifying oxides and oxides offering various levels of refractoriness.

Similar materials also form the solid component for glazes and/or other semi-finished ceramic products employed with other techniques for applying decorations, such as screen printing, chalcographic systems, etc ...

Once the ceramic inks and other semi-finished ceramic products have been deposited on the surface of ceramic substrates such as slabs or tiles, whether fired or unfired, they must undergo an appropriate heat treatment in order to assume their final permanent solid shape by virtue of which the decorations formed adhere permanently to the surface to which they have been applied and give rise to a decoration which is both mechanically and chemically resistant.

In any case, the heat treatment (firing) undergone by ceramic products must be carried out both to fire the ceramic substrate and to process the decoration, either separately (firing the substrate and subsequently firing the decorations) or simultaneously in a single stage (single-fired).

Normally these treatments are carried out by subjecting the entire ceramic product with the surface to which the decoration was applied to a preset heat cycle inside a kiln.

As the production of oversize ceramic products is becoming more widespread, slabs are produced rather than tiles, as they may have, for example, dimensions of 1600 mm x 3200 mm x 3 - 60 mm and processing cycles which increasingly involve final cutting operations to crop or finish (calibrate) the edges of end products with dimensions which are either less than those of the original slab or are specially shaped.

In these cases the processed edges do not feature, obviously, the same decoration as is present on the 'good' face or on the visible decorated face of the slab or tile. Therefore the edge must be decorated in a way that ensures it harmonises aesthetically with the decoration on the "good" face of the tile.

In most cases, the edge is decorated using the same decoration technique as is used for the "good" face of the slab, in particular, with inkjet printing technology.

The physical-chemical fixing or firing of the materials deposited onto the portions of surface consisting of the edges is achieved through the action of at least one laser beam 3 which is selectively aimed at the individual portion of the surface in question. This is, therefore, to cover limited portions of the surface of the slab or tile which have to be decorated or which have already been decorated.

The energy density of the laser beam 3 incident on the deposited decoration materials or on other deposited semi-finished materials is commensurate with the characteristics thereof and of the ceramic substrate and has a minimum value of approximately 5 J/mm².

Laser beams with variable spot sizes and wavelengths in near and far infrared can be used.

The possibility of adjusting the action of the laser beam by aiming it precisely at the surface to be hit means one can operate on the edge of the slabs or tiles, as well as on other limited portions of surfaces, with great accuracy, by controlling and distributing the amount of energy to be transmitted.

This ensures high quality of the complete end decoration without any particular problems due to localised heating and also prevents the need for the entire product to be fired again, which would result in obvious increases in production times and costs.

The laser beam to the defined portions of the surface to be processed can be applied using the usual controlled scanning systems in order to cover the individual portions of the same surface by controlling the scanning speed in order to achieve the determined energy supply per unit of surface area.

The process described is used in a line arrangement, as shown for example Figure 2, along which line the slabs or tiles are conveyed so that the respective edges travel at a preset distance and in a preset position with respect to the laser beam 3, which has already been positioned with respect to the slab or tile conveying line. In this way the laser source is in a fixed position with respect to the line while the laser beam is activated in synchronism with the travel of the edges or in any case with the portions of surface which need to be processed. It should be noted that the system can also envisage that the slab remains in a fixed position while the laser beam generator 4 moves to hit the desired areas with the laser beam 3.

The linear arrangement is particularly convenient in the production of items such as ceramic slabs or tiles, which normally takes place on a continuous production line. This means the items can undergo a subsequent conventional continuous heat treatment.

## Claims

1. Process for decorating portions of the surface of edges (2) of ceramic slabs or tiles (1), comprising, in the order:
- deposition of decorating materials used for the decoration of objects onto individual portions of the surface of edges of ceramic slabs or tiles;
- chemical or physical fixation or firing of the decorating materials deposited on said portions of the surface of edges of ceramic slabs tiles, said decorating materials including ceramic dyes or enamels used in decoration techniques;
wherein the process is - carried out in a line arrangement of a continuous production line;
**characterized in that** said step of chemical or physical fixation or firing of the decorating materials deposited on said portions is carried out by the action of at least one laser beam (3) directed at the individual portions of the concerned surface; and **in that**
said ceramic slabs or tiles to be decorated are fired.

2. Process according to claim 1 **characterized in that** the energy density of the laser beam incident on the decorating materials deposited on the surface of edges of ceramic slabs or tiles is commensurate with the characteristics of the latter and of the substrate and has a minimum value of approximately 5 J/mm².

3. Process according to claim 2 **characterised in that** laser beams with variable spot sizes and wavelengths in near and far infrared are used.

## Patentansprüche

1. Verfahren zum Dekorieren von Teilen der Oberfläche der Kanten (2) von Keramikplatten oder -fliesen (1), einschließlich in der Reihenfolge:
- Auftragen von zur Dekoration von Gegenständen verwendeten Dekorationsmaterialien auf einzelne Teile der Oberfläche der Kanten von Keramikplatten oder -fliesen;
- chemisches oder physisches Fixieren oder Brennen der auf den genannten Teilen der Oberfläche der Kanten von Keramikplatten oder -fliesen aufgebrachten Dekorationsmaterialien, wobei die Dekorationsmaterialien bei Dekorationstechniken verwendete keramische Farbstoffe oder Emaillen umfassen;
- wobei der Vorgang in einer Linienanordnung einer kontinuierlichen Produktionslinie durchgeführt wird; **dadurch gekennzeichnet, dass** der genannte Schritt der chemischen oder physischen Fixierung oder des Brennens der auf den Abschnitten aufgebrachten Dekorationsmaterialien durch die Einwirkung mindestens eines Laserstrahls (3) durchgeführt wird, der auf die einzelnen Abschnitte der betreffenden Oberfläche gerichtet wird; und wobei die genannten Keramikplatten oder -fliesen dekoriert und gebrannt werden.

2. Verfahren nach Patentanspruch 1, **dadurch gekennzeichnet, dass** die Energiedichte des Laserstrahls, der auf die auf der Oberfläche der Kanten von Keramikplatten oder -fliesen aufgebrachten Dekorationsmaterialien trifft, den Eigenschaften dieser und des Grundmaterials angemessen ist sowie einen Mindestwert von ca. 5 J/mmm² aufweist.

3. Verfahren nach Patentanspruch 2, **dadurch gekennzeichnet, dass** diese Laserstrahlen mit variablen Punktgrößen und Wellenlängen im nahen und fernen Infrarot verwendet werden.

## Revendications

1. Procédé de décoration de portions de la surface des bords (2) de dalles ou de carreaux de céramique (1) comprenant, dans l'ordre:
- dépôt de matériaux de décoration utilisés pour la décoration d'objets sur des portions individuelles de la surface des bords de dalles ou de carreaux de céramique ;
- la fixation ou la cuisson chimique ou physique des matériaux de décoration déposés sur lesdites portions de la surface des bords de dalles ou de carreaux de céramique, lesdits matériaux de décoration comprenant des colorants ou des émaux céramiques utilisés dans les techniques de décoration ;
- dans lequel le procédé est mis en oeuvre dans un agencement de lignes d'une ligne de production continue ; **caractérisé en ce que** ladite étape de fixation chimique ou physique, ou de cuisson des matériaux de décoration déposés sur lesdites portions est mise en oeuvre par l'action d'au moins un faisceau laser (3) dirigé sur les portions individuelles de la surface concernée ; et **en ce que** lesdites dalles ou carreaux de céramique à décorer et à cuire.

2. Procédé selon la revendication 1, **caractérisé en ce que** la densité d'énergie du faisceau laser incident sur les matériaux de décoration déposés sur la surface des bords de dalles ou de carreaux de céramique est proportionnelle aux caractéristiques de ces derniers et du substrat et a une valeur minimale d'environ 5 J/mm².

3. Procédé selon la revendication 2, **caractérisé en ce que** des faisceaux laser avec des tailles de taches et des longueurs d'onde variables dans l'infrarouge proche et lointain sont utilisés.
